# EUROPEAN PATENT SPECIFICATION

(11) **EP 1 111 948 B1**
(45) Date of publication and mention of the grant of the patent: **20.02.2008**
(21) Application number: 99310300.1
(22) Date of filing: 21.12.1999
(51) Int. Cl.: H04Q 7/36, H04B 7/26

(54) **A method and apparatus for operating a cellular radio telecommunications network**
Eine Methode und ein Apparat zum Betrieb eines zellularen Telekommunikationsystems
Une méthode et un appareil pour la commande d'un système de télécommunications cellulaire

(43) Date of publication of application: 27.06.2001
(73) Proprietor: Lucent Technologies Inc., Murray Hill, New Jersey 07974-0636 (US)
(72) Inventor: Karimi, Hamid Reza, Swindon, Wiltshire SN5 5BJ (GB); Kuzminskiy, Alexandr, Shaw, Swindon, Wiltshire SN5 9RB (GB); Luschi, Carlo, Oxford, Oxfordshire OX2 0QT (GB); Sandell, Magnus, Swindon, Wiltshire SN1 3PN (GB); Strauch, Paul Edward, Swindon, Wiltshire SN5 9GQ (GB); Yan, Ran-Hong, Longcot, Oxfordshire SN7 7SS (GB)
(74) Representative: Williams, David John

(56) References cited:
- WO-A-98/36598

## Description

The invention relates to a cellular radio telecommunications network, a method, a protocol and a computer program for operating the same.

The background to the invention will be described in relation to time division multiple access networks. The reader will appreciate that the invention may be applied generally to other types of network. Introducing a space division multiple access (SDMA) component in a TDMA mobile radio system like GSM can provide higher frequency reuse and spectral efficiency, see C. Farsakh, J. A. Nossek, "Application of Space Division Multiple Access to mobile radio", in Proc. PIMRC, pp. 736- 739, 1994. The mobiles remain unaffected by the SDMA component without any need for antenna diversity or a more sophisticated equaliser. Additional hardware and software are restricted to base stations which have to be equipped with an antenna array. This array is used to separate wavefronts in coherent multipath environments by means of spatial beamforming or spatio-temporal signal processing. A conventional way to introduce simultaneous SDMA users sharing the same physical channel is to assign different signatures (training sequences) to different intracell users. These training sequences are used at the uplink for estimating the propagation channels and/or direction-of arrival (DOA) of wavefronts, and recovering the transmitted data. Afterwards, this information is exploited for beam forming at the downlink, see C. Farsakh, J. A. Nossek, "Application of Space Division Multiple Access to mobile radio", in Proc. PIMRC, pp. 736- 739, 1994; P. E. Morgensen, P. Zetterberg, H. Darn, P. Leth-Espensen, F. Frederiksen, " Algorithms and antenna array recommendations (Part 1)", Technical Report TSUNAMI II ACO20IAUC/A1.2/DR/P/OO5/b1, May 1997; and Z. Zvonar, P. lung, L. Kamrnerlander, (Editors), "GSM evolution towards 3rd generation systems", Kluwer Academic Publishers, Boston/Dordreht/London, 1999.

This known solution is not directly applicable to a GSM system. Eight different training sequences are specified for the GSM normal burst, in order to distinguish between the desired user and co-channel interference, see GSM 03.03 (ETS 300 927), "Digital cellular telecommunications system (Phase 2+); Numbering, addressing and identification"; and GSM 05.02 (ETS 300 574), "Digital cellular telecommunications system (Phase 2+); Multiplexing and multiple access on the radio path".

The selection of training sequence is a part of the Base Station Identity Code (BSIC), and the training sequence number is common to all channels in a cell. A solution of this problem is proposed in the P. E. Morgensen, P. Zetterberg, H. Darn, P. Leth-Espensen, F. Frederiksen, reference and in the Z. Zvonar, P. lung, L. Kamrnerlander reference.

This method allows assignment of different signatures to SDMA users in a GSM system. In this case, one single physical cell with a SDMA base station is separated into several logical GSM cells. A drawback of this solution is that it does not comply with the current GSM specifications. It requires a modification of the standard and major changes to the Base Station Sub-System (BSS) software. Moreover, given the availability of a limited number of training sequences, the above approach leads to a situation where it is not possible to assign different training sequences to all the neighboring cells using the same frequency. Therefore, the possibility of discriminating between co-cell users is achieved at the price of an increased vulnerability with respect to inter-cell interference.

It is known from International (P.C.T.) Patent Publication WO98/36598 to provide a space division multiple access, SDMA, and time division multiple access, TDMA, cellular radio telecommunications network, in which physical channels defined by timeslot are reused in the same cell.

The present invention according to independent claims 1 and 6 is characterised over the disclosure of WO98/36598 in that a time shift is applied between data bursts on the reused channels up link so as to differentiate between the channels.

Same cell reuse (SCR) can thus be implemented in a TDMA (GSM) system without assigning different signatures to SDMA users sharing the same physical channel. Broadly, the idea is to introduce a time shift between SDMA users at the uplink.

The reused channels preferably use a common clock signal.

Timing advance information for each base station reusing a channel may be transmitted on the down link.

The reused channels may all use the same signature.

The invention also extends to a method of operation a time division multiple access cellular radio telecommunications network, in which physical channels may be reused in the same cell, reused channels on the up link being differentiated by a time shift between them.

The invention further extends to a protocol and to a computer program for carrying out the method.

One embodiment of the invention will now be described, by way of example, with reference to the accompanying drawings, in which:
Figure 1 shows schematically, data flow for two users using the same physical channel in a mobile telephone network embodying the invention;
Figure 2 is a graph showing performance for the two users against time shift;
Figure 3 shows the architecture for a master BTS embodying the invention;
Figure 4 shows the architecture for a slave BTS embodying the invention; and
Figure 5 shows the architecture of a conventional BTS.

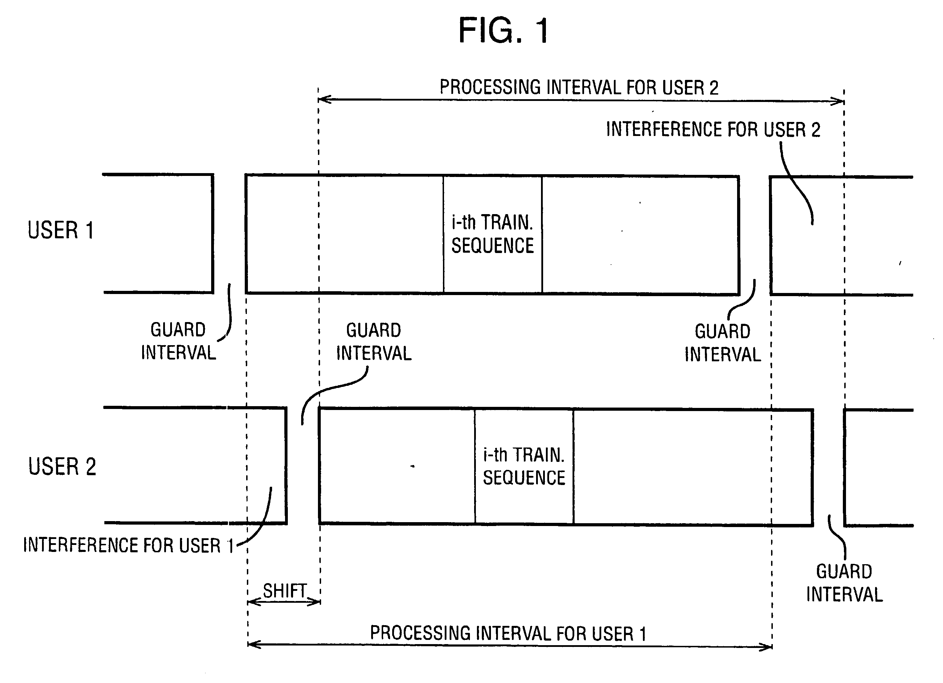

An example of the modified transmission protocol in the case of two users 1 and 2 is illustrated in Fig.1. The time shift exceeds the length of the time delay in the propagation channels to prevent the propagation delays in paths from different users causing simultaneous arrival of their signals.

The delay does not significantly exceed the duration of the guard interval to avoid performance degradation induced by interference from adjacent bursts (Interference for Users 1,2 in Fig.1).

In practice, the time shift is achieved by introducing a phase difference in the reference clock which synchronises co-cell transmissions of mobile users within a common time-slot. For each SDMA user, the base station produces a timing advance information based on a unique time-shifted version of the reference clock, thus compensating for different round-trip delays due to different positions of the mobile The tolerance in the time of arrival of the burst of each user remains as detailed in GSM 05.10 (ETS 300 579), "Digital cellular telecommunications system (Phase 2+); Radio subsystem synchronisation".

The time-shifted protocol is employed in the uplink. The downlink is governed by the same reference clock for all SDMA users. This allows the transmission of one common broadcast signalling (broadcast control channel (BCCH), frequency correction channel (FCCH), and synchronisation channel (SCH) within the cell, GSM 05.02 (ETS 300 574), "Digital cellular telecommunications system (Phase 2+); Multiplexing and multiple access on the radio path".

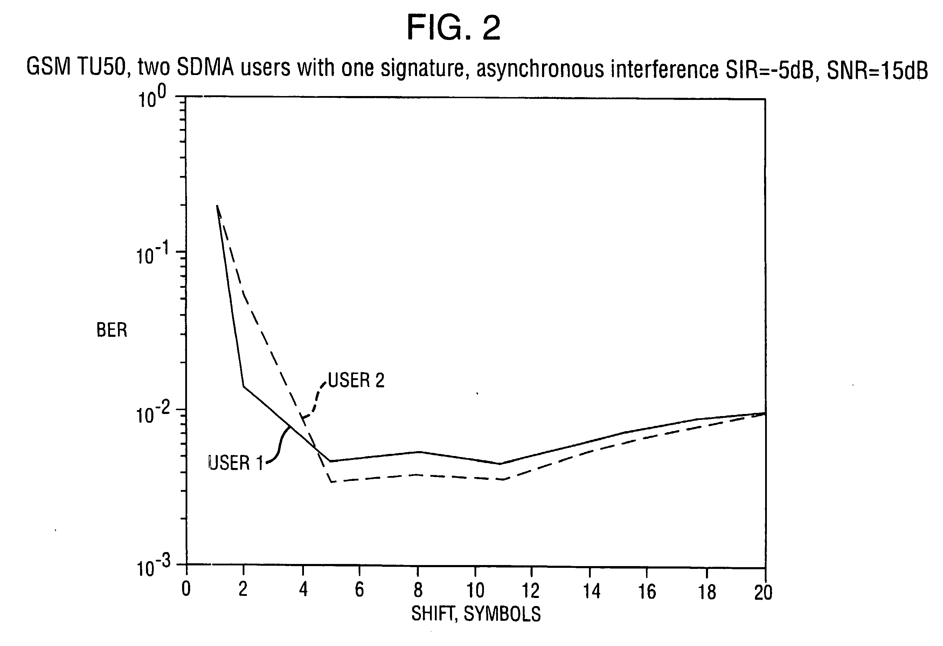

When a time-shifted transmission is arranged, a conventional spatial or spatio-temporal processing are implemented on the processing intervals (Fig.1) to estimate channels/DOA and recover the transmitted data. An illustration of the use of a spatio-temporal filter adjusted by means of the standard Least Squares algorithm is shown in Fig.2 for a typical GSM urban scenario (where the length of propagation channel is approximately four symbols). The raw BER in the case of two SDMA users with the common GSM training sequence number 0 is presented for different values of time shift. The results are obtained with an antenna array of four elements spaced by one wavelength. Fig.2 shows that both users are recovered and that the optimal value of time shift is close to the duration of the guard interval (eight symbols).

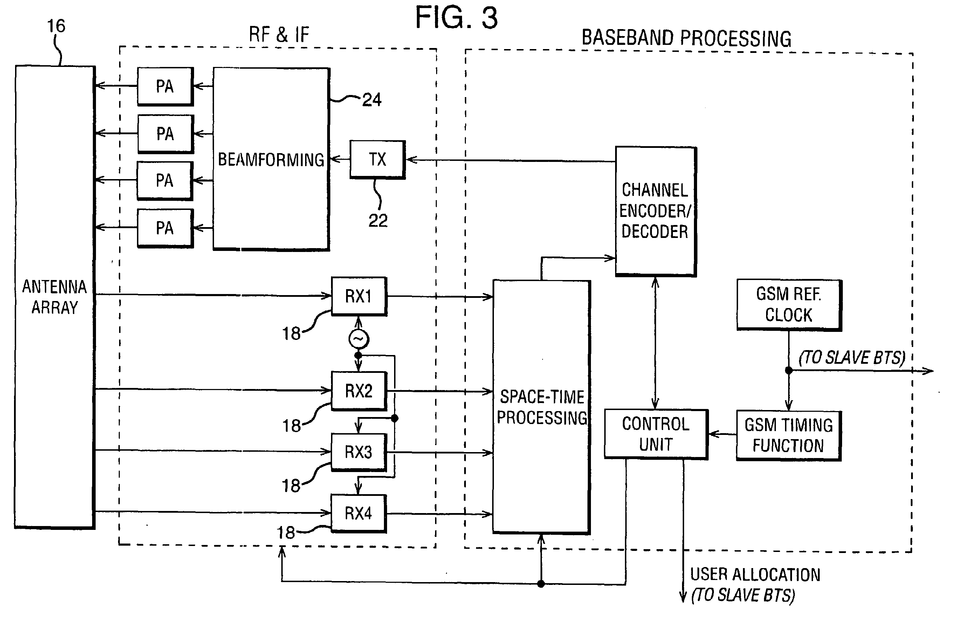

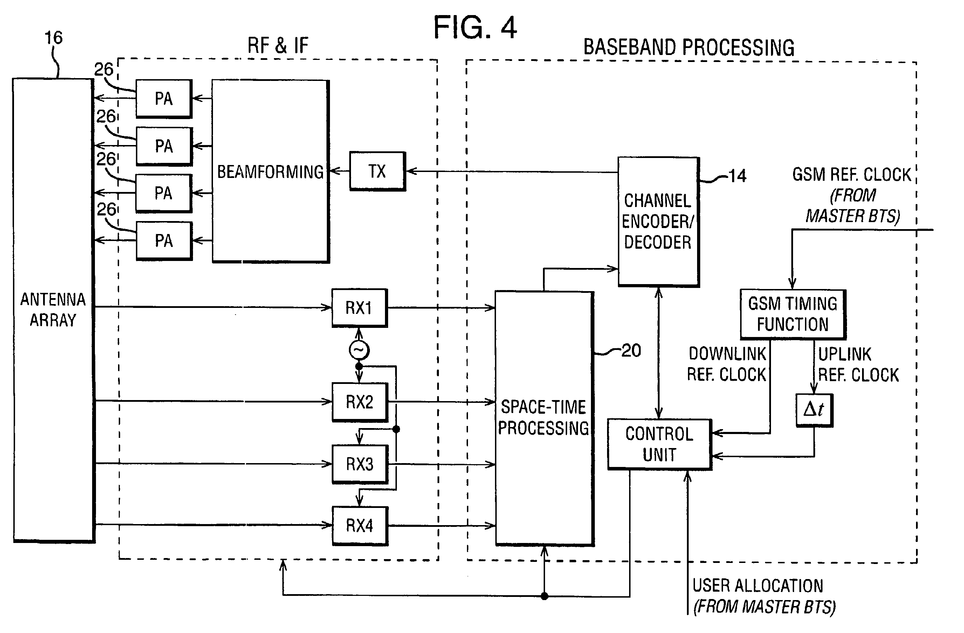

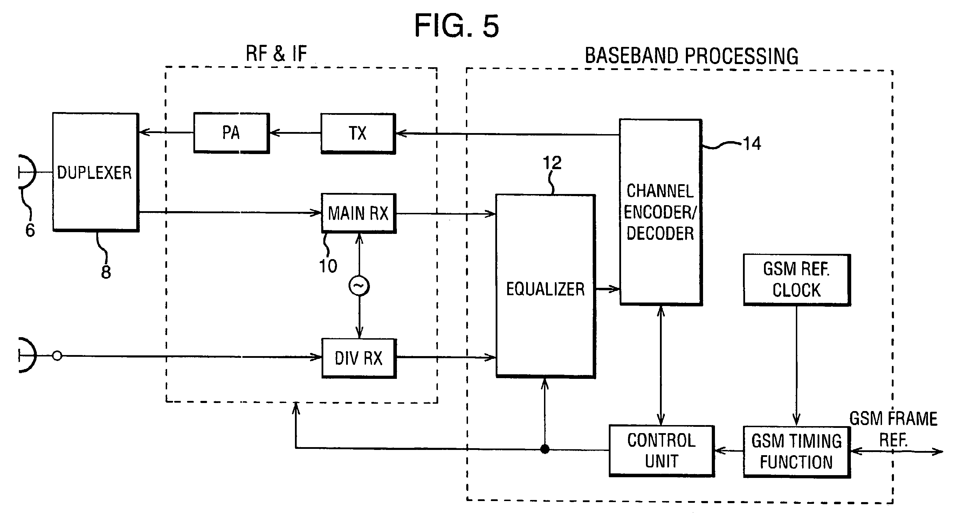

An implementation of the proposed solution in a GSM system is presented in Figs. 3 and 4. As a reference, Fig.5 illustrates the typical architecture of a current GSM base transceiver station (BTS). In Figure 5, one or more antennas 6 are used at the uplink for each GSM carrier. The signal received at each antenna passes through a duplexer 8 to a receiver 10 where it is filtered and down converted to baseband in RF and IF stages. The baseband waveform is converted into a digital signal, and processed by an equaliser 12 and channel decoder 14. For the downlink, the encoded, modulated data are sent to the RF and IF stages. The RF signal is amplified by a power amplifier (PA), and transmitted by a single antenna. The operations of digital signal processing in equaliser and decoder,-and the RF-and IF stages with the PA are controlled by a unit for which time reference is provided by a GSM timing function. This in turn, according to the GSM specifications, can receive the reference clock from either an internal or external source.

Figs. 3 and 4 show the architecture of the SDMA BTSs. To implement the time-shifted protocol, co-located base stations are provided, with a master BTS (Fig.3) generating the reference clock signal, and one or more slave BTSs (Fig.4) which receive the reference clock signal from an external input. In this example, in each BTS an antenna array 16 of M elements, the M signals received at the array elements are coherently down converted to baseband by M receivers 18, and fed to a (analog or digital) spatio- temporal processing unit 20, the output of which is processed by the channel decoder 14. At the transmitter side, after encoding and modulation in transmitter 22, beamforming is performed by a beam forming unit 24. Again in this example, a separate PA 26 is used for each antenna element. The time reference for the BTS is provided by the GSM timing function. The master BTS uses the internal reference for both uplink and downlink. The slave BTSs use a shifted reference for the computation of the timing advance information to be sent to the mobile and for the processing related to the uplink, while the remaining operation is synchronous with the master BTS. Only the master BTS broadcasts the BCCH bursts, and the frequency-correction and synchronisation bursts within the cell. The random access bursts transmitted by the mobile users in the cell are demodulated by the master BTS. As shown in Figs. 3 and 4, the master BTS also controls the allocation of the users to one of the SDMA base stations.

In an alternative arrangement, the protocol can be also implemented with one base station per cell, provided that the BTS is equipped with two receivers operating with shifted time reference.

## Claims

1. A space division multiple access, SDMA, time division multiple access, TDMA, cellular radio telecommunications network conforming to the GSM standard, in which physical channels, differentiated by frequency and timeslot, are reused in the same cell using SDMA, **characterised in that**, further differentiation between the reused channels is achieved by applying an additional time shift to the data bursts on the up link, the said time shift being greater than propagation delay in the reused channels and not more than the guard interval.

2. A network as claimed in claim 1, wherein the reused channels use a common clock signal.

3. A network as claimed in claim 1 or 2, in which timing advance information for each base station reusing a channel is transmitted on the down link.

4. A network as claimed in any of claims 1 to 3, a base station having two receivers operating with mutually shifted time references.

5. A network as claimed in any preceding claim, wherein the reused channels all use the same training sequence.

6. A method of operation of a space division multiple access, SDMA, and time division multiple access TDMA, cellular radio telecommunications network conforming to the GSM standard, in which physical channels differentiated by frequency and time slot are reused in the same cell using SDMA, **characterised in that**, further differentiation between the reused channels is achieved by applying an additional time shift to the data bursts on the up link, the said time shift being greater than the propagation delay in the reused channels and the base station, and not more than the guard interval.

7. A method as claimed in claim 6, wherein the reused channels use a common clock signal.

8. A method as claimed in claim 6 or 7, in which timing advance information for each base station reusing a channel is transmitted on the down link.

9. A method as claimed in any of claims 6 to 8 wherein two receivers at a base station operate with mutually shifted time references.

10. A method as claimed in any of the claims 6 to 9, wherein the reused channels all use the same training sequence.

11. A protocol for carrying out all the steps of the method of any of claims 6 to 10.

12. A computer program product for carrying out all the steps of the method of any of claims 6 to 10.

## Patentansprüche

1. Dem GSM-Standard entsprechendes Zellularfunk-Telekommunikationsnetz mit Raummultiplex-Mehrfachzugriff SDMA und Zeitmultiplex-Mehrfachzugriff TDMA, in dem durch Frequenz und Zeitschlitz differenzierte physische Kanäle in derselben Zelle unter Verwendung von SDMA wiederverwendet werden, **dadurch gekennzeichnet, daß** durch Anwenden einer zusätzlichen Zeitverschiebung auf die Datenbursts auf der Aufwärtsstrecke zusätzliche Differenzierung zwischen den wiederverwendeten Kanälen erreicht wird, wobei die Zeitverschiebung größer als Ausbreitungsverzögerung in den wiederverwendeten Kanälen und höchstens gleich dem Schutzintervall ist.

2. Netz nach Anspruch 1, wobei die wiederverwendeten Kanäle ein gemeinsames Taktsignal verwenden.

3. Netz nach Anspruch 1 oder 2, in dem Zeitsteuerungs-Vorrückinformationen für jede einen Kanal wiederverwendende Basisstation auf der Abwärtsstrecke gesendet werden.

4. Netz nach einem der Ansprüche 1 bis 3, wobei eine Basisstation zwei mit gegenseitig verschobenen Zeitreferenzen betriebene Empfänger aufweist.

5. Netz nach einem der vorhergehenden Ansprüche, wobei die wiederverwendeten Kanäle alle dieselbe Trainingssequenz verwenden.

6. Verfahren zum Betrieb eines dem GSM-Standard entsprechenden Zellularfunk-Telekommunikationsnetzes mit Raummultiplex-Mehrfachzugriff SDMA und Zeitmultiplex-Mehrfachzugriff TDMA, bei dem durch Frequenz und Zeitschlitz differenzierte physische Kanäle in derselben Zelle unter Verwendung von SDMA wiederverwendet werden, **dadurch gekennzeichnet, daß** durch Anwenden einer zusätzlichen Zeitverschiebung auf die Datenbursts auf der Aufwärtsstrecke zusätzliche Differenzierung zwischen den wiederverwendeten Kanälen erreicht wird, wobei die Zeitverschiebung größer als Ausbreitungsverzögerung in den wiederverwendeten Kanälen und höchstens gleich dem Schutzintervall ist.

7. Verfahren nach Anspruch 6, wobei die wiederverwendeten Kanäle ein gemeinsames Taktsignal verwenden.

8. Verfahren nach Anspruch 6 oder 7, bei dem Zeitsteuerungs-Vorrückinformationen für jede einen Kanal wiederverwendende Basisstation auf der Abwärtsstrecke gesendet werden.

9. Verfahren nach einem der Ansprüche 6 bis 8, wobei zwei Empfänger in einer Basisstation mit gegenseitig verschobenen Zeitreferenzen arbeiten.

10. Verfahren nach einem der Ansprüche 6 bis 9, wobei die wiederverwendeten Kanäle alle dieselbe Trainingssequenz verwenden.

11. Protokoll zum Ausführen aller Schritte des Verfahrens nach einem der Ansprüche 6 bis 10.

12. Computerprogrammprodukt zum Ausführen aller Schritte des Verfahrens nach einem der Ansprüche 6 bis 10.

## Revendications

1. Réseau de télécommunications radio cellulaire à accès multiple par répartition dans le temps, TDMA, à accès multiple par répartition spatiale, SDMA, conforme au standard GSM, dans lequel des canaux physiques, différenciés en fréquence et en tranche de, temps, sont réutilisés dans la même cellule au moyen du SDMA, **caractérisé en ce qu'**une différenciation supplémentaire entre les canaux réutilisés est réalisée en appliquant un décalage temporel supplémentaire aux rafales de données sur la liaison montante, ledit décalage temporel étant supérieur au temps de propagation dans les canaux réutilisés et non supérieur à l'intervalle de garde.

2. Réseau selon la revendication 1, dans lequel les canaux réutilisés utilisent un signal d'horloge commun.

3. Réseau selon la revendication 1 ou 2, dans lequel des informations d'avance de cadencement de chaque station de base réutilisant un canal sont transmises sur la liaison descendante.

4. Réseau selon l'une quelconque des revendications 1 à 3, comportant une station de base ayant deux récepteurs fonctionnant avec des références temporelles mutuellement décalées.

5. Réseau selon l'une quelconque des revendications précédentes, dans lequel les canaux réutilisés utilisent tous la même séquence d'apprentissage.

6. Procédé d'exploitation d'un réseau de télécommunications radio cellulaire à accès multiple par répartition dans le temps, TDMA, à accès multiple par répartition spatiale, SDMA, conforme au standard GSM, dans lequel les canaux physiques, différenciés en fréquence et en tranche de temps, sont réutilisés dans la même cellule au moyen du SDMA, **caractérisé en ce qu'**une différenciation supplémentaire entre les canaux réutilisés est réalisée en appliquant un décalage temporel supplémentaire aux rafales de données sur la liaison montante, ledit décalage temporel étant supérieur au temps de propagation dans les canaux réutilisés et la station de base, et non supérieur à l'intervalle de garde.

7. Procédé selon la revendication 6, dans lequel les canaux réutilisés utilisent un signal d'horloge commun.

8. Procédé selon la revendication 6 ou 7, dans lequel des informations d'avance de cadencement de chaque station de base réutilisant un canal sont transmises sur la liaison descendante.

9. Procédé selon l'une quelconque des revendications 6 à 8, dans lequel deux récepteurs au niveau d'une station de base fonctionnent avec des références temporelles mutuellement décalées.

10. Procédé selon l'une quelconque des revendications 6 à 9, dans lequel les canaux réutilisés utilisent tous la même séquence d'apprentissage.

11. Protocole pour l'exécution de toutes les étapes du procédé selon l'une quelconque des revendications 6 à 10.

12. Produit de programme informatique pour l'exécution de toutes les étapes du procédé selon l'une quelconque des revendications 6 à 10.
